# EUROPEAN PATENT APPLICATION

(11) **EP 1 608 159 A2**
(43) Date of publication of application: **21.12.2005**
(21) Application number: 05253449.2
(22) Date of filing: 04.06.2005
(51) Int. Cl.: H04N 5/445

(54) **Image processing device, method and storing medium**

(30) Priority: 15.06.2004 KR 2004044173
(71) Applicant: SAMSUNG ELECTRONICS CO., LTD., Suwon-city, Gyeonggi-do (KR)
(72) Inventor: Kim, Bo-kyung, Gyeonggi-do (KR)
(74) Representative: Brandon, Paul Laurence

(57) **Abstract**

An image processing device, method, and medium providing an optimal video signal to users when a video signal is output after predetermined data is overlaid over the video signal. The image processing device includes a separating unit (200) that separates a video signal, an audio signal, and additional information from a broadcast signal, a memory unit (500) that stores a partial video signal corresponding to a predetermined area of an original video signal, the partial video signal obtained by decoding the separated video signal, and a control unit (600) that overlays the separated additional information over the stored partial video signal and outputs a final video signal obtained by overlaying the partial video signal over which the separated additional information is overlaid over the original video signal.

## Description

The present invention relates to image processing devices, methods, and media.

In general, when extended data in addition to video data are delivered to users using broadcasting technology, on-screen-display (OSD) data, such as characters or pictures, overlay video data. Usually, program information of the broadcast signal and, if necessary, time information and weather information are provided to users using the OSD characters or pictures.

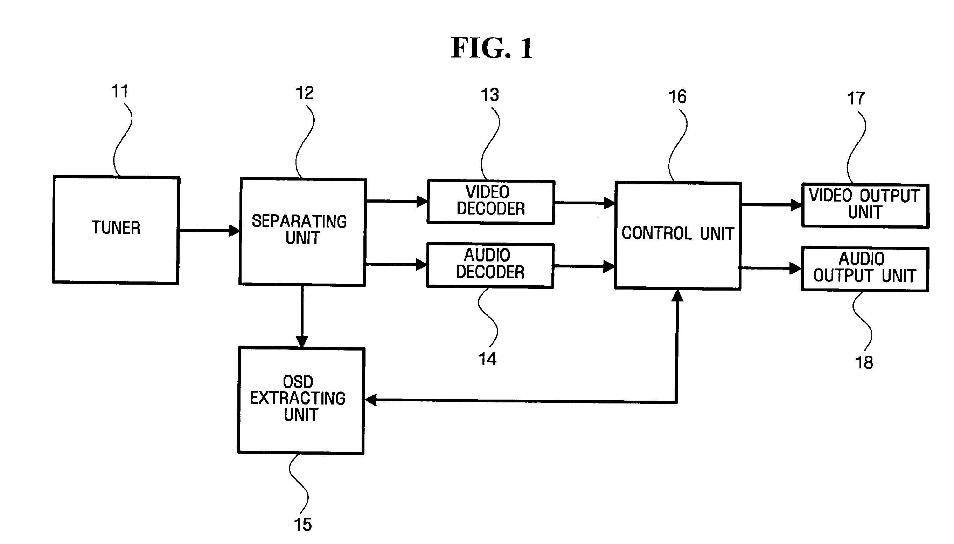

FIG. 1 is a block diagram of a conventional image processing device. The conventional image processing device includes a tuner 11 that receives a broadcast signal, a separating unit 12 that separates a video signal, an audio signal, and additional information from the broadcast signal received through the tuner 11, a video decoder 13 that decodes the separated video signal, an audio decoder 14 that decodes the separated audio signal, an OSD extracting unit 15 that extracts OSD data from the received broadcast signal, and a control unit 16.

The image processing device further includes a video output unit 17 that outputs a decoded video signal and an audio output unit 18 that outputs the decoded audio signal. The video output unit 17 may be coupled to a display and the audio output unit 18 may be coupled to a speaker or other sound generating device.

The control unit 16 extracts a video signal from an area of the decoded video signal corresponding to a position at which the OSD data is to be overlaid, overlays the extracted video signal over the decoded video signal, and then overlays the extracted OSD data over the decoded video signal.

Here, if the control unit 16 directly overlays the extracted OSD data over the decoded video signal, the color of the overlaid OSD data may change when the colors of pixels that are adjacent to the overlaid OSD data change. Thus, the control unit 16 overlays the video signal extracted from the decoded video signal over the decoded video signal after correcting the color of the extracted video signal, and then overlays the extracted OSD data over the decoded video signal to prevent the color of the overlaid OSD data from changing.

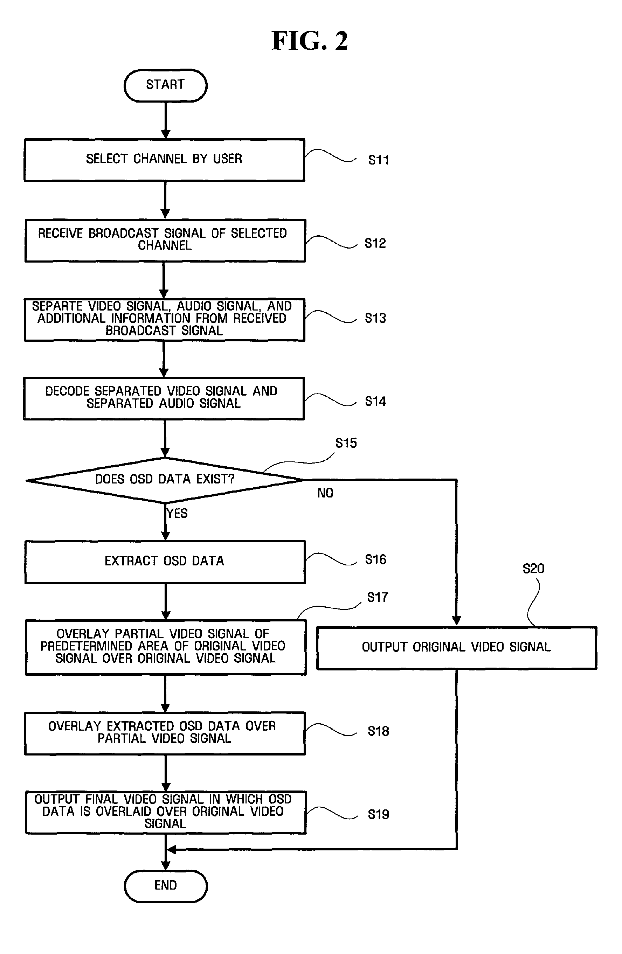

With respect to Figures 1 and 2, the decoded video signal may be referred to as an original video signal, the video signal of the area over which OSD data is to be overlaid may be referred to as a partial video signal, and a video signal that is output through the video output unit 17 after the OSD data is overlaid over the decoded video signal may be referred to as a final video signal.

Thus, users are provided with a variety of additional information such as program information, time information, and weather information in the form of OSD data overlaid over a video signal while watching the video signal.

The conventional image processing device operates as follows.

In the operation of the conventional image processing device, as shown in FIG. 2, a user first selects a channel of interest in step S11. In this case, the control unit 16 sets a predetermined value corresponding to the selected channel in a predetermined register of the tuner 11 and the tuner 11 receives a broadcast signal having a frequency band corresponding to the set value.

The tuner 11 receives a broadcast signal having a frequency band corresponding to the selected channel in step S12.

The separating unit 12 separates a video signal, an audio signal, and additional information from the broadcast signal received through the tuner 11 in step S13.

The video decoder 13 decodes the separated video signal and the audio decoder 14 decodes the separated audio signal in step S14.

The control unit 16 determines whether OSD data exists in the received broadcast signal based on a result of separation in step S15.

If the OSD data does not exist in the received broadcast signal, the control unit 16 outputs the original video signal in step S20, which does not include the OSD data, to video output unit 17. The video output unit 17 may output the original video signal to a display.

If the OSD data exists in the received broadcast signal, the OSD extracting unit 15 extracts the OSD data from the separated additional information under the control of the control unit 16 in step S16.

The control unit 16 extracts a partial video signal from an original video signal and overlays the extracted partial video signal over the original video signal in step S17.

The control unit 16 further overlays the extracted OSD data over the overlaid partial video signal in step S18 and the video output unit 17 outputs a final video signal over which the extracted OSD data is overlaid in step S19.

However, in the image processing device and method according to prior art, to output OSD data, a partial video signal is overlaid over an original video signal and then the OSD data is overlaid over the overlaid partial video signal.

Thus, frequently overlaying over a video signal causes flicker in the video signal, making it difficult to provide an optimal video signal to users.

Korean Patent Published Application No. 2002-64429 describes an apparatus for removing jitter in a digital TV, which decodes video screen data and digital OSD data according to a synchronization signal, receives a signal corresponding to an area to which the decoded video signal and OSD data are output, and displays the received signal. However, according to the disclosed apparatus, which involves removing OSD jitter generated when digital OSD data is overlaid over an analog TV screen, there is still a limit in preventing flicker from a video signal, which is caused by frequent overlaying operations.

Preferred embodiments of the present invention aim to provide an image processing device, method, and medium for providing an optimal video signal to users when outputting the same with predetermined data overlaid over the video signal by a minimum number of times.

According to an aspect of the present invention, there is provided an image processing device including a separating unit that separates a video signal, an audio signal, and additional information from a broadcast signal, a memory unit that stores a partial video signal corresponding to a predetermined area of an original video signal, the original video signal obtained by decoding the separated video signal, and a control unit that overlays the separated additional information over the stored partial video signal and outputs a final video signal obtained by overlaying the partial video signal over which the separated additional information is overlaid over the original video signal.

According to another aspect of the present invention, there is provided an image processing method including separating a video signal, au audio signal, and additional information from a broadcast signal, storing a partial video signal of a predetermined area of an original video signal obtained by decoding the separated video signal, and overlaying the separated additional information over the stored partial video signal and outputting a final video signal obtained by overlaying the partial video signal over which the separated additional information is overlaid over the original video signal.

According to another aspect of the present invention, there is provided at least one computer readable medium storing instructions that control at least one processor to perform a method including separating a video signal, audio signal, and additional information from a broadcast signal; storing a partial video signal of a predetermined area of an original video signal obtained by decoding the separated video signal; overlaying the separated additional information over the stored partial video signal; and outputting a final video signal obtained by overlaying the partial video signal over which the separated additional information is overlaid over the original video signal.

According to another aspect of the present invention, there is provided an image processing device including a memory unit that stores a partial video signal corresponding to a predetermined area of an original video signal; and a control unit that overlays on-screen-display data over the stored partial video signal to provide a combined partial video signal, and that outputs a final video signal obtained by overlaying the combined partial video signal over the original video signal.

According to another aspect of the present invention, there is provided an image processing method including storing a partial video signal of a predetermined area of an original video signal; overlaying on-screen-display data over the stored partial video signal to provide a combined partial video signal; and outputting a final video signal obtained by overlaying the combined partial video signal over the original video signal.

According to another aspect of the present invention, there is provided an at least one computer readable medium storing instructions that control at least one processor to perform a method including storing a partial video signal of a predetermined area of an original video signal; overlaying on-screen-display data over the stored partial video signal to provide a combined partial video signal; and outputting a final video signal obtained by overlaying the combined partial video signal over the original video signal.
Further features of the present invention are set out in the appended claims.

The present invention will become apparent and more readily appreciated from the following description of the embodiments, by way of example only, taken in conjunction with the accompanying drawings of which:
FIG. 1 is a block diagram of an image processing device according to prior art;
FIG. 2 is a flowchart illustrating an image processing method according to prior art;
FIG. 3 is a block diagram of an image processing device according to an exemplary embodiment of the present invention;
FIG. 4 is a flowchart illustrating an image processing method according to an exemplary embodiment of the present invention;
FIG. 5 is a flowchart illustrating a method by which a user changes the position of output OSD data according to an exemplary embodiment of the present invention;
FIG. 6 illustrates an original video signal according to an exemplary embodiment of the present invention;
FIG. 7 illustrates a partial video signal over which OSD data is overlaid, according to an exemplary embodiment of the present invention; and
FIG. 8 illustrates a final video signal over which the partial video signal is overlaid, according to an exemplary embodiment of the present invention.

Reference will now be made in detail to exemplary embodiments of the present invention, examples of which are illustrated in the accompanying drawings, wherein like reference numerals refer to the like elements throughout. The present invention may, however, be embodied in many different forms and should not be construed as being limited to the embodiments set forth herein. Rather, these embodiments are provided so that this disclosure will be thorough and complete and will fully convey the concept of the invention to those skilled in the art. The exemplary embodiments are described below to explain the present invention by referring to the figures.

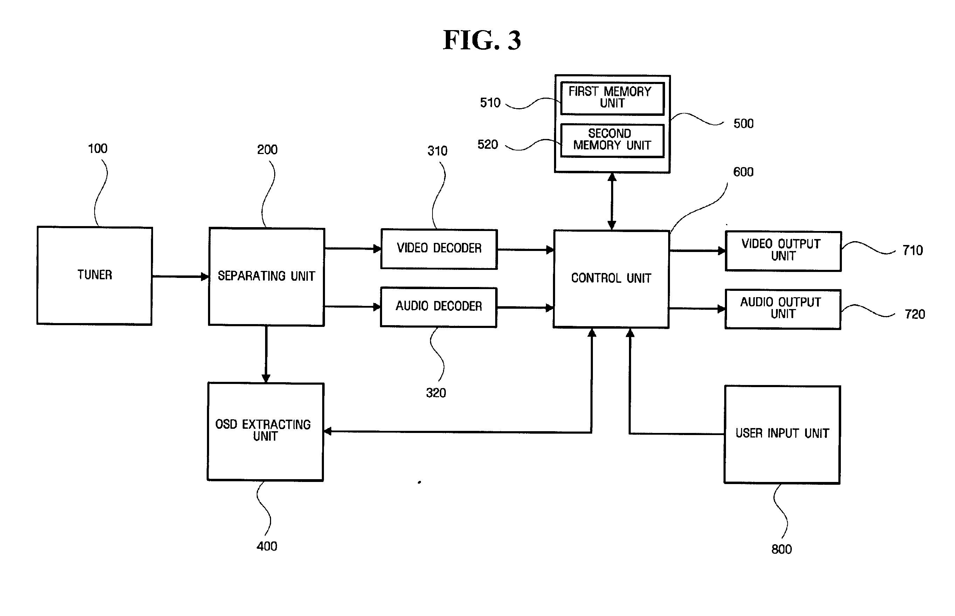

With respect to Figures 3 through 8, the decoded video signal may be referred to as an original video signal. A video signal of the area over which OSD data is to be overlaid may be referred to as a partial video signal. A video signal, which is output through the video output unit 170 after overlaying the OSD data over the partial video signal and after overlaying the resulting partial video signal over the original video signal, may be referred to as a final video signal. The resulting partial video signal may also be referred to as a combined partial video signal.

As shown in FIG. 3, an image processing device according to an exemplary embodiment of the present invention includes a tuner 100 that receives a broadcast signal of a channel selected by a user, a separating unit 200 that separates a video signal, an audio signal, and additional information from the received broadcast signal, a video decoder 310 that decodes the separated video signal, an audio decoder 320 that decodes the separated audio signal, an OSD extracting unit 400 that extracts OSD data from the separated additional information, a memory unit 500 that stores a partial video signal of a predetermined area of an original video signal obtained by decoding the separated video signal, and a control unit 600 that overlays the extracted OSD data over the stored partial video signal and outputs a final video signal after overlaying the resulting partial video signal over the original video signal.

The image processing device further includes a video output unit 710 that outputs the final video signal in which the extracted OSD data is overlaid over the original video signal, an audio output unit 720 that outputs the decoded audio signal, and a user input unit 800 through which a user's selection is input. For example, the selection may identify a channel selected by the user or may identify a position of a partial video signal. The selection may have a selected value representing the selection.

The control unit 600 determines whether OSD data exists in the received broadcast signal based on a result of separation. If OSD data exists in the received broadcast signal, the control unit 600 controls the OSD extracting unit 400 to extract the OSD data.

In this case, the control unit 600 may store a partial video signal of an area of an original video signal corresponding to a predetermined position or a position designated by the user in the memory unit 500.

The control unit 600 may periodically update a partial video signal stored in the memory unit 500 during reception of a broadcast signal through the tuner 100.

The control unit 600 also may overlay the extracted OSD data over the partial video signal stored in the memory unit 500 and then store the resulting partial video signal in the memory unit 500 or a separate memory.

The memory unit 500 may include, but is not limited to, a cache, a read-only memory (ROM), a programmable ROM (PROM), an erasable PROM (EPROM), an electrically erasable PROM (EEPROM), a compact disk read-only memory (CD-ROM), a digital video disc read-only memory (DVD-ROM), a flash memory, a static random access memory (SRAM), a dynamic random access memory (DRAM), and the like.

The control unit 600 outputs a final video signal obtained by overlaying the partial video signal over which the extracted OSD data is overlaid over the original video signal through the video output unit 710.

In this case, the control unit 600 may change the position of the overlaid OSD data in the final video signal output through the video output unit 700 according to user's input value.

For example, when the user input unit 800 is a remote control, the user may change the position of the partial video signal using direction keys of the remote control. The user input unit 800 may also be a mobile node. The mobile nodes include laptop computers, web pads, hand-held PCs, personal digital assistants (PDAs), mobile phones, and so on, which can communicate wirelessly with the control unit 600.

In this case, the control unit 600 may copy the partial video signal whose position is changed by the user and store the copied partial video signal in the memory unit 500.

The user input unit 800 may not only be a remote control but also include, without being limited to, an input device such as a mouse or a digital pen that allows the user to change the position of the partial video signal.

According to another exemplary embodiment of the present invention, the memory unit 500 may include a first memory unit 510 that stores OSD data and a second memory unit 520 that stores a partial video signal of a predetermined area of an original signal and a partial video signal over which OSD data stored in the first memory unit 510 is overlaid.

In this case, the first memory unit 510 and the second memory unit 520 may be implemented with separate hardware or integrated in single hardware.

In addition, the first memory unit 510 and the second memory unit 520 may include, but are not limited to, a cache, a read-only memory (ROM), a programmable ROM (PROM), an erasable PROM (EPROM), an electrically EPROM (EEPROM), a compact disk read-only memory (CD-ROM), a digital video disc (DVD-ROM), a flash memory, a static random access memory (SRAM), a dynamic random access memory (DRAM), and the like.

The image processing device according to an illustrative exemplary embodiment of the present invention operates as follows.

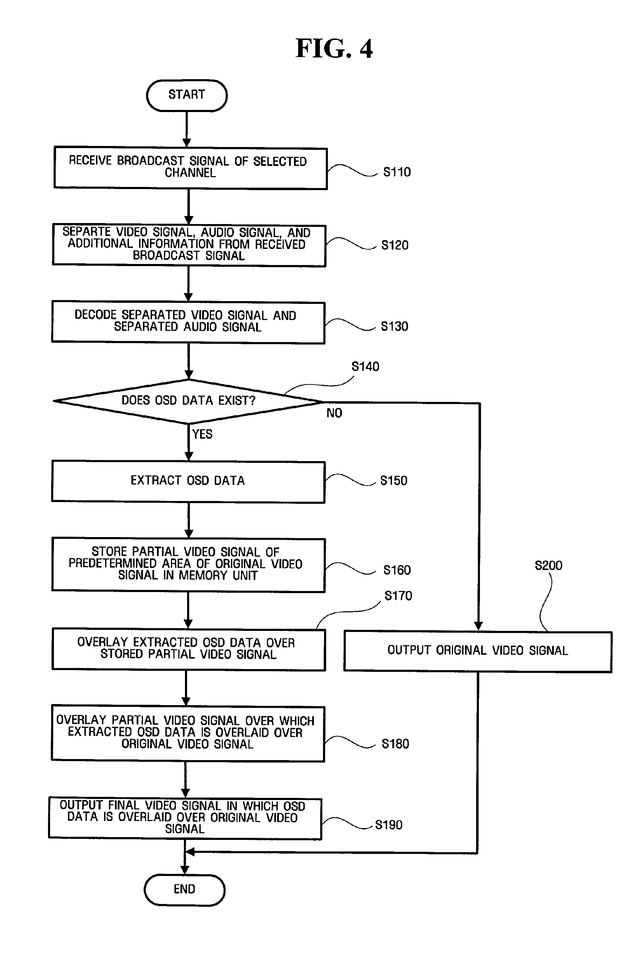

FIG. 4 is a flowchart illustrating an image processing method according to an exemplary embodiment of the present invention.

First, the tuner 100 receives a broadcast signal of a channel selected by the user in step S110.

In this case, a predetermined value according to the selected channel may be set in a register of the tuner 100 and the tuner 100 may receive a broadcast signal having a frequency band corresponding to the set value.

The separating unit 200 separates a video signal, an audio signal, and additional information from the received broadcast signal in step S120.

In this case, the additional information may include a variety of information like OSD data and program information beside from a video signal and an audio signal.

The separated video signal and the separated audio signal are decoded by the video decoder 310 and the audio decoder 320, respectively, in step S130.

The control unit 600 determines whether OSD data exists in the received broadcast signal based on a result of separation performed by the separating unit 200 in step S140.

If the OSD data does not exist in the received broadcast signal, the control unit 16 outputs the original video signal in step S200, which does not include the OSD data to video output unit 170. The video output unit 170 may output the original video signal to a display.

If the OSD data exists in the received broadcast signal, the control unit 600 controls the OSD extracting unit 500 to extract the OSD data from the received broadcast signal in step S150.

In addition, the control unit 600 extracts a partial video signal of a predetermined area of an original video signal obtained by decoding the separated video signal and stores the extracted partial video signal in the memory unit 500 in step S160 and overlays the extracted OSD data over the stored partial video signal in step S170.

The partial video signal over which the OSD data is overlaid may be stored in the memory unit 500 or a separate memory.

Here, the partial video signal stored in the memory unit 500 may have been copied from an area of an original video signal corresponding to a predetermined position or a position designated by the user.

Also, the user can designate and change the position of the extracted partial video signal and delete the extracted partial video signal from the memory unit 500.

The control unit 600 overlays the partial video signal over which the extracted OSD data is overlaid over the original video signal in step S180 and outputs a final video signal in which the OSD data is overlaid over the original video signal through the video output unit 710 in step S190.

If the OSD data does not exist in the received broadcast signal, the separated video signal and the separated audio signal are decoded by the video decoder 310 and the audio decoder 320, respectively. The decoded video signal and the decoded audio signal are output through the video output unit 310 and the audio output unit 320, respectively.

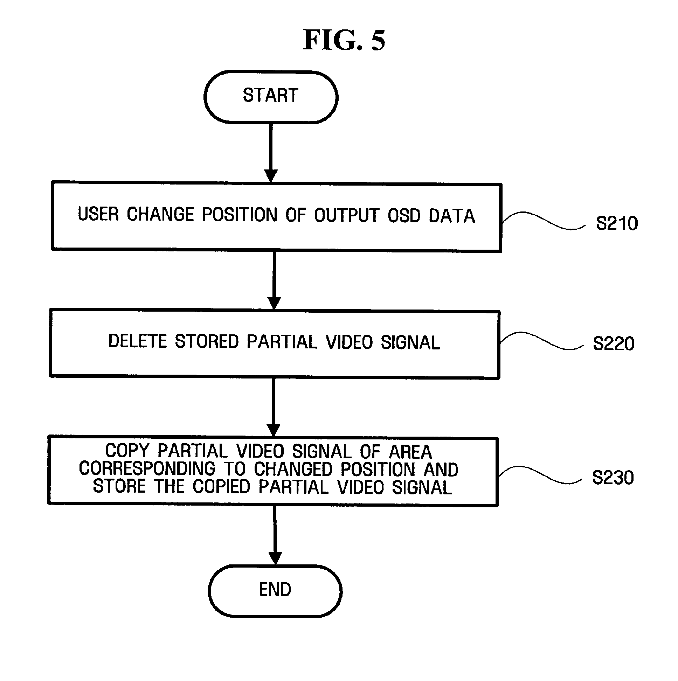

FIG. 5 is a flowchart illustrating a method by which a user changes the position of output OSD data through the user input unit 800 according to an exemplary embodiment of the present invention.

First, the user changes the position of OSD data output through the video output unit 710 using the user input unit 800 in step S210.

When changing the position of the output OSD data, the control unit 600 deletes a partial video signal stored in the memory unit 500 in step S220 and copies a partial video signal of an area corresponding to the changed position and stores the copied partial video signal in the memory unit 500 in step S230.

Thereafter, a process of outputting the OSD data through the partial video signal stored in the memory unit 500 is performed in a manner similar to steps S170, S180, and S190.

Alternatively, the control unit 600 may store the extracted OSD data in the first memory unit 510 and may store the partial video signal extracted from the original video signal and the partial video signal over which the extracted OSD data is overlaid in the second memory unit 520.

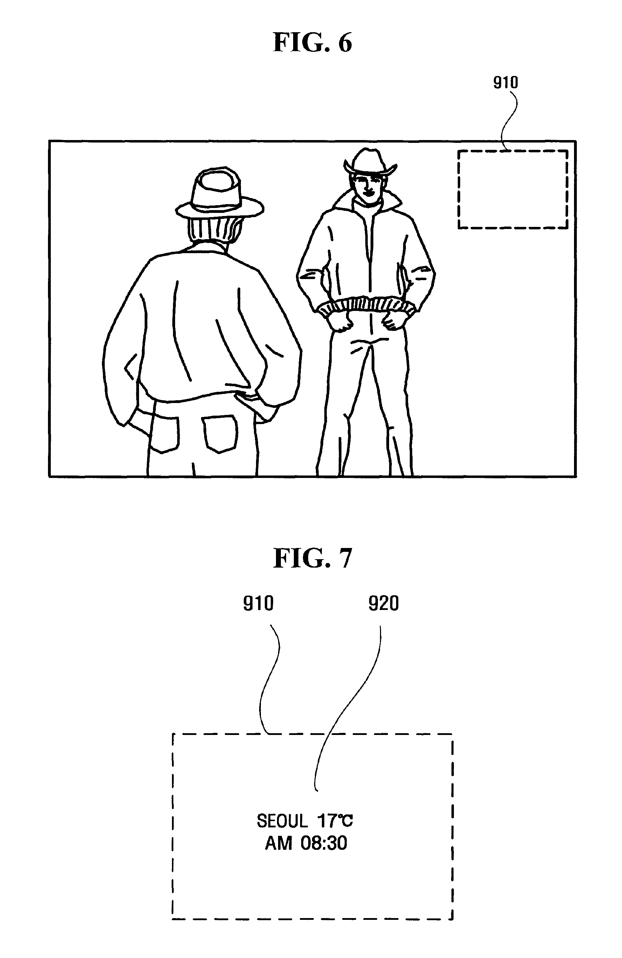

Hereinafter, a process of outputting OSD data using the image processing method will be described in detail with reference to FIGS. 6 through 8.

When OSD data exists in the received broadcast signal, the control unit 600 copies a partial video signal corresponding to a predetermined area 910 of an original video signal according to a position at which the partial video signal is to be output through the video output unit 710 and stores the copied partial video signal in the memory unit 500, as shown in FIG. 6.

As shown in FIG. 7, the control unit 600 overlays extracted OSD data 920 over the partial video signal stored in the memory unit 500 and stores the resulting partial video signal in the memory unit 500.

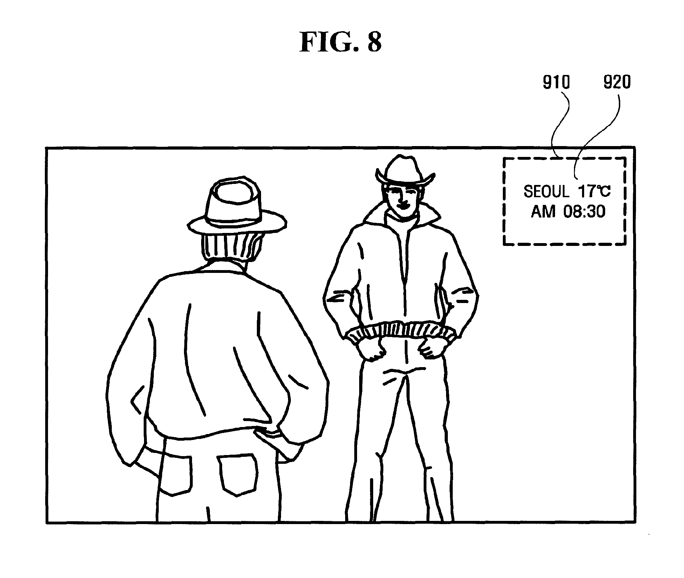

As shown in FIG. 8, the control unit 600 overlays the stored partial video signal over which the extracted OSD data 920 is overlaid over the original video signal to be output through the video output unit 710.

Thus, a portion of a complicated process of overlaying a partial video signal of a predetermined area of an original video signal over the original video signal and then overlaying OSD data over the overlaid partial video signal can be skipped, thereby preventing flicker caused by frequent overlaying operations.

As described above, according to an the image processing device and method of a preferred embodiment of the present invention, steps required when predetermined data is overlaid over a video signal can be reduced, thereby preventing flicker caused by frequent overlaying operations.

Exemplary embodiments have been described herein with reference to a control unit 600. It is understood that the control unit 600 may include a controller, a plurality of controllers, a processor, a plurality of processors, a programmable processing apparatus, or the like.

Exemplary embodiments of the present invention have been described herein with reference to flowchart illustrations of methods according to exemplary embodiments of the present invention. It is be understood that each block of the flowchart illustrations, and combinations of blocks in the flowchart illustrations, can be implemented by computer program instructions. These computer program instructions can be provided to controller(s), processor(s), or other programmable data processing apparatus to produce a machine, such that the instructions executed via the controller, processor or other programmable data processing apparatus implement the functions specified in the flowchart block or blocks. These computer program instructions may also be stored in a computer usable or computer-readable memory that can direct controller(s), processor(s) or other programmable data processing apparatus to function in a particular manner, such that the instructions stored in the computer usable or computer-readable memory produce an article of manufacture to implement the function specified in the flowchart block or blocks. The computer program instructions may also be loaded onto controller(s), processor(s), or other programmable data processing apparatus to cause a series of operational steps to be performed by the controller(s), processor(s), or other programmable apparatus to produce a computer implemented process such that the instructions that execute on controller(s), processor(s), or other programmable apparatus provide steps for implementing the functions specified in the flowchart block or blocks.

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing device comprising:
a separating unit (200) that separates a video signal, an audio signal, and additional information from a broadcast signal;
a memory unit (500) that stores a partial video signal corresponding to a predetermined area of an original video signal, the original video signal obtained by decoding the separated video signal; and
a control unit (600) that overlays the separated additional information over the stored partial video signal and outputs a final video signal obtained by overlaying the partial video signal over which the separated additional information is overlaid over the original video signal.

2. The image processing device of claim 1, wherein the memory unit (500) includes a first memory unit (510) that stores the separated additional information and a second memory unit (520) that stores the partial video signal of the predetermined area and the partial video signal over which the separated additional information is overlaid.

3. The image processing device of claim 2, further comprising a user input unit (800) through which a user's selected value for changing a position of additional information included in the output final video signal is input.

4. The image processing device of claim 3, wherein the control unit (600) updates the partial video signal stored in the memory unit (500) with a partial video signal corresponding to the position changed according to the input value selected by the user.

5. The image processing device of any preceding claim, wherein the additional information is on-screen-display data.

6. An image processing method comprising:
separating a video signal, audio signal, and additional information from a broadcast signal;
storing a partial video signal of a predetermined area of an original video signal obtained by decoding the separated video signal;
overlaying the separated additional information over the stored partial video signal; and
outputting a final video signal obtained by overlaying the partial video signal over which the separated additional information is overlaid over the original video signal.

7. The image processing method of claim 6, wherein the outputting of the final video signal further comprises storing the separated additional information and the partial video signal over which the separated additional information is overlaid.

8. The image processing method of claim 7, further comprising inputting a user's selected value for changing a position of additional information included in the output final video signal.

9. The image processing method of claim 8, wherein the inputting of the value further comprises deleting the stored partial video signal and storing a partial video signal corresponding to the position changed according to the input value selected by the user.

10. The image processing method of any one of claims 5 - 9, wherein the additional information is on-screen-display data.

11. At least one computer readable medium storing instructions that control at least one processor to perform a method comprising:
separating a video signal, audio signal, and additional information from a broadcast signal;
storing a partial video signal of a predetermined area of an original video signal obtained by decoding the separated video signal;
overlaying the separated additional information over the stored partial video signal; and
outputting a final video signal obtained by overlaying the partial video signal over which the separated additional information is overlaid over the original video signal.

12. The medium of claim 11, wherein the additional information is on-screen-display data.

13. An image processing device, comprising:
a memory unit (500) that stores a partial video signal corresponding to a predetermined area of an original video signal; and
a control unit (600) that overlays on-screen-display data over the stored partial video signal to provide a combined partial video signal, and that outputs a final video signal obtained by overlaying the combined partial video signal over the original video signal.

14. The image processing device of claim 13, further comprising a separating unit (200) that receives a broadcast signal and separates the original video signal from the broadcast signal and separates the on-screen-display data from the broadcast signal.

15. The image processing device of claim 13 or claim 14, wherein the memory unit (500) includes a first memory unit (510) that stores the on-screen-display data and a second memory unit (520) that stores the partial video signal of the predetermined area and stores the combined partial video signal of the predetermined area.

16. The image processing device of claim 15, further comprising a user input unit (800) through which a user's selected value is input to change a position where on-screen-display data is to be included in the final video signal.

17. The image processing device of claim 16, wherein the control unit (600) updates the partial video signal stored in the memory unit (500) with a partial video signal corresponding to the position changed according to input value selected by the user.

18. An image processing method comprising:
storing a partial video signal of a predetermined area of an original video signal;
overlaying on-screen-display data over the stored partial video signal to provide a combined partial video signal; and
outputting a final video signal obtained by overlaying the combined partial video signal over the original video signal.

19. The image processing method of claim 18 further comprising:
receiving a broadcast signal; and
separating the original video signal and the on-screen-display data from the broadcast signal.

20. The image processing method of claim 19, further comprising storing the on screen-display data and the combined partial video signal.

21. The image processing method of claim 18, further comprising inputting a user's selected value for changing a position of on-screen-display data in the final video signal.

22. The image processing method of claim 22, wherein the inputting of the user's selected value includes deleting stored partial video signal and storing another partial video signal corresponding to the position changed according to the input value selected by the user.

23. At least one computer readable medium storing instructions that control at least one processor to perform a method comprising:
storing a partial video signal of a predetermined area of an original video signal;
overlaying on-screen-display data over the stored partial video signal to provide a combined partial video signal; and
outputting a final video signal obtained by overlaying the combined partial video signal over the original video signal.
